# EUROPÄISCHE PATENTSCHRIFT

(11) **EP 0 601 150 B1**
(45) Veröffentlichungstag und Bekanntmachung des Hinweises auf die Patenterteilung: **04.09.1996**
(21) Anmeldenummer: 93912575.3
(22) Anmeldetag: 09.06.1993
(51) Int. Cl.: F02D 41/26, F02D 41/22, G06F 15/16, B60K 26/00

(54) **STEUEREINRICHTUNG FÜR FAHRZEUGE**
MOTOR VEHICLE CONTROL DEVICE
DISPOSITIF DE COMMANDE DE VEHICULES A MOTEUR

(30) Priorität: 20.06.1992 DE 4220247
(43) Veröffentlichungstag der Anmeldung: 15.06.1994
(73) Patentinhaber: ROBERT BOSCH GMBH, 70442 Stuttgart (DE)
(72) Erfinder: MÜLLER, Margit, D-7144 Asperg (DE); KNOSS, Martin, D-7144 Asperg (DE); ZELLER, Thomas, D-7257 Ditzingen (DE)
(86) Internationale Anmeldenummer: DE9300499
(87) Internationale Veröffentlichungsnummer: WO9400682

(56) Entgegenhaltungen:
- EP-A- 0 536 557
- DE-A- 3 539 407
- FR-A- 2 646 687

## Beschreibung

### Stand der Technik

Die Erfindung betrifft eine Steuereinrichtung für Fahrzeuge gemäß dem Oberbegriff des Patentanspruchs 1.

Zunehmend werden Steuereinrichtungen für Fahrzeuge besonders aus Gründen der Betriebssicherheit und der Verfügbarkeit mit wenigstens zwei Rechenelementen ausgestattet. Dies gilt insbesondere für den bevorzugten Anwendungsbereich der nachfolgend beschriebenen Erfindung in Verbindung mit einer elektronischen Motorleistungssteuerung für Kraftfahrzeuge. Beispiele für derartige Steuereinrichtungen sind der DE-A 37 00 986 (US-A 4 881 227) oder der DE-A 35 39 407 zu entnehmen.

Die DE-A 37 00 968 (US-A 4 881 227) beschreibt ein Rechnersystem mit zwei Prozessoren in einem Kraftfahrzeug, bei welchem die beiden Prozessoren völlig unabhängig voneinander arbeiten, sich gegenseitig anhand verschiedener Überwachungskriterien, beispielsweise anhand eines vorgeschriebenen Datenaustauschprotokolls überwachen und im Fehlerfall sich gegenseitig neu starten können. Vorschläge im Hinblick auf ein Sicherheitskonzept bei der Anwendung eines derartigen Rechensystems auf eine elektronische Motorleistungssteuerung werden nicht beschrieben.

Die DE-A 35 39 407 beschreibt ebenfalls ein Rechnersystem mit zwei Prozessoren für ein Kraftfahrzeug, wobei vorgeschlagen ist, daß im Normalbetrieb eine Arbeitsaufteilung unter den Rechnern zur Verbesserung der Sicherheit und der Arbeitsgeschwindigkeit vorgenommen wird. Diese Arbeitsteilung sieht dabei vor, daß in einem ersten Prozessor die Bestimmung des Sollwertes für eine Regelung vorgenommen wird, während im anderen, zweiten Prozessor die Berechnung der Stellgröße in Abhängigkeit von der Differenz zwischen Sollwert und Istwert erfolgt. Dadurch wird durch Verteilung der Rechnerbelastung die Rechnergeschwindigkeit sowie die Geschwindigkeit der Regelung erhöht. Als Sicherheitkonzept ist ferner vorgesehen, daß alle Überwachungsaufgaben, welche der Betriebssicherheit sowie der Verfügbarkeit des Systems dienen, von beiden Prozessoren in redundanter Weise parallel zueinander durchgeführt werden. Beide Rechenelemente besitzen daher bezüglich der Überwachungsmaßnahmen einen auf hohem Niveau stehenden Funktionsumfang mit entsprechend hohem Aufwand.

Daher ist es die Aufgabe der Erfindung, ein Sicherheitkonzept für eine Steuereinrichtung für Fahrzeuge mit wenigstens zwei Rechenelementen, die wenigstens zur Durchführung derselben Steuerfunktion dienen, anzugeben, so daß der Funktionsumfang der einzelnen Rechenelemente reduziert werden kann, ohne daß die Betriebsicherheit und Verfügbarkeit des Gesamtsystems beeinträchtigt werden.

Dies wird durch die kennzeichnenden Merkmale des Patentanspruchs 1 erreicht. Dabei werden die zur Sicherstellung der Betriebssicherheit und Verfügbarkeit erforderlichen Überwachungsmaßnahmen zumindest teilweise auf die Rechenelemente aufgeteilt und vom jeweiligen Rechenelement ausschließlich und unabhängig durchgeführt.

Die bevorzugte Anwendung der beschriebenen Steuereinrichtung liegt auf dem Gebiet der Motorsteuerung für Kraftfahrzeuge. Eine derartige Motorsteuerung umfaßt bei Otto-Motoren neben Zündungssteuerung und Benzineinspritzung bei modernen Steuereinrichtungen auch eine elektronische Motorleistungssteuerung, das heißt eine elektronische Steuerung der Stellung der Drosselklappe, die im wesentlichen vom Fahrerwunsch (Stellung eines vom Fahrer betätigbaren Bedienelements) abhängig ist. Ähnliche Steuereinrichtungen sind in Verbindung mit Dieselmotoren bekannt, wobei dort im Rahmen der Steuerung bzw. Regelung der Kraftstoffzufuhr eine in Abhängigkeit der Betätigung des Bedienelements stehende Beeinflussung des Leistungsstellelements der Einspritzpumpe vorgesehen ist. Da derartige Systeme leistungserhöhend wirken, sind bezüglich der Überwachungsmaßnahmen für die steuernden elektronischen Einrichtungen die hohe Anforderungen zu stellen.

In der Vergangenheit wurden daher verschiedene Strategien entwickelt, die zur Überwachung dieser elektronischen Einrichtungen dienen, und beispielsweise aus der DE-A 35 10 173 (US-A 4 603 675), aus der DE-A 40 04 086, der DE-A 28 39 467 (US-A 4 305 359) sowie der nicht vorveröffentlichten deutschen Patentanmeldung P 41 335 716 bekannt sind.

Aus der DE-OS 35 10 173 (US-A 4 603 675) ist bekannt, die Differenz zwischen Soll- und Istwert für die Stellung einer Drosselklappe dahingehend zu überwachen, ob nach einer vorgegebenen Zeit sich Soll- und Istwert in einem vorgegebenen Toleranzbereich zueinander befinden. Ferner ist vorgesehen, beispielsweise mit dem vom Fahrer betätigbaren Bedienelement zwei Stellungsgeber zu verbinden, wobei ein Fehler im Bereich der Stellungsgeber festgestellt wird, wenn die Signaldifferenz zwischen den beiden Stellungsgebern einen vorgegebenen Maximalwert überschreitet.

Aus der DE-A 28 39 467 (US-A 4 305 359) ist bekannt, anhand eines Vergleichs der Stellung des vom Fahrer betätigbaren Bedienelements und der Stellung des Leistungsstellelements eine Fehlfunktion der Steuereinrichtung abzuleiten, indem ein Fehlerzustand dann angenommen wird, wenn sich die Stellung des Bedienelements und die Stellung des Leistungsstellelements sich nicht im Rahmen der vorgegebenen Toleranzen entsprechen.

Schließlich wird in der nicht vorveröffentlichten deutschen Patentanmeldung P 41 33 571 vorgeschlagen, in Verbindung mit dem vom Fahrer betätigbaren Bedienelement und/oder dem Leistungsstellelement drei Stellungsgeber vorzusehen, so daß zur Auswertung bezüglich von Fehlfunktionen im Bereich dieser Stellungsgeber drei Stellungsinformationen zur Verfügung stehen. Dabei wird durch eine sogenannte Zwei-aus-Drei-Auswahl möglich, den fehlerhaften Stellungsgeber zu isolieren und die Funktion der Steuereinrichtung auf der Basis der zwei als funktionsfähig erkannten Stellungsgeber ohne Einschränkung der Verfügbarkeit in vollem Umfang aufrechtzuhalten.

### Vorteile der Erfindung

Die erfindungsgemäße Vorgehensweise erlaubt die Realisierung einer Steuereinrichtung mit mehreren Rechenelementen, bei der der Funktionsumfang der einzelnen Rechenelemente reduziert ist, ohne daß die Betriebssicherheit und Verfügbarkeit der Steuereinrichtung beeinträchtigt wird.

Besondere Bedeutung kommt der erfindungsgemäßen Vorgehensweise dadurch zu, daß durch die Aufteilung der Überwachungsmaßnahmen ein flexibles, programmierbares Sicherheitskonzept dargestellt werden kann. Jedes Rechenelement kann bezüglich der ihm zugeordnten Überwachungsmaßnahmen und bezüglich der Reaktion auf deren Ergebnisse unabhängig vom oder von den anderen Rechenelementen eingerichtet werden.

Insbesondere ist es vorteilhaft, aufwendigere Überwachungsmaßnahmen (für eine feinere Überwachung) einem ersten Rechenelement zuzuordnen, während Überwachungsmaßnahmen einfacherer Art (für eine gröbere Überwachung) von einem zweiten Rechenelement unabhängig vom ersten durchführt werden.

Dabei ist vorteilhaft, daß das zweite Rechenelement einen sehr geringen Funktionsumfang aufweist und daher mit geringem Aufwand bereitzustellen ist.

In diesem Zusammenhang ist es vorteilhaft, dem ersten Rechenelement eine Überwachungsfunktion anhand des Soll- und Istwerts des Regelkreises zuzuordnen, dem anderen Rechenelement eine gröbere Überwachung anhand von Fahrpedalstellung und Stellelementestellung zu übertragen. Dadurch wird das Regelsystem, insbesondere die Lage des Stellelements, durch zwei Überwachungsfunktionen, die in zwei Rechenelementen unabhängig voneinander durchgeführt werden, auf redundanten Pfaden überwacht.

Ein weiterer Vorteil der erfindungsgemäßen Vorgehensweise ist, daß zwischen den beiden Rechenelementen keine starre Kopplung erforderlich ist, so daß beide Rechenelemente weitere Funktionen (z.B. Kraftstoffeinspritzung, Zündung) übernehmen können.

Vorteilhaft ist ferner, im zweiten Rechenelement bei einem elektronischen Motorleistungssteuerungssystem Überwachungsmaßnahmen bezüglich extern eingreifender Funktionen, wie Fahrgeschwindigkeitsregler, MSR-Eingriff, etc. durchzuführen.

Eine weitere Verbesserung der Betriebsicherheit wird durch Überwachung der beiden Rechenelemente durch zyklischen Datenaustausch erreicht.

Durch die Unabhängigkeit der beiden Rechenelemente ist die Verwendung von redundanten (dreifachen) Sensoren von Vorteil, deren Meßsignale jewils ganz oder teilweise in den Rechenelemente zur Funktionsüberprüfung ausgewertet werden.

Weitere Vorteile ergeben sich aus der nachfolgenden Beschreibung von Ausführungsformen und aus den abhängigen Ansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild einer Steuereinrichtung für eine elektronische Motorleistungssteuerung. In Figur 2 und 3 sind beispielshaft anhand eines bevorzugten Ausführungsbeispiels die in den beiden Rechenelementen jeweils ablaufenden Überwachungsmaßnahmen skizziert.

### Beschreibung von Ausführungsformen

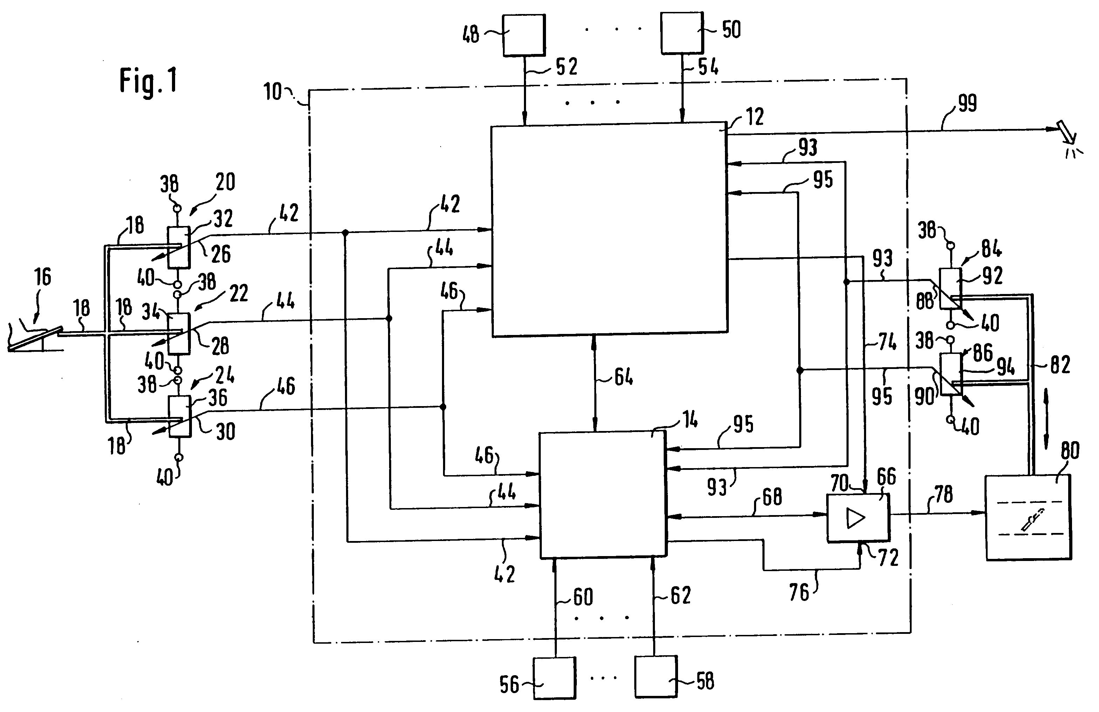

In Figur 1 ist eine Steuereinrichtung 10 für eine Antriebseinheit eines Fahrzeugs dargestellt, welche wenigstens die beiden Rechenelemente 12 und 14 umfaßt. Ferner ist ein vom Fahrer betätigbares Bedienelement 16 gezeigt, welches über eine mechanische Verbindung 18 mit drei Stellungsgebern 20, 22 und 24 verbunden ist. In Figur 1 sind diese Stellungsgeber gemäß einem vorteilhaften Ausführungsbeispiel als Potentiometer dargestellt. Dabei wirkt das Bedienelement 16 über die Verbindung 18 auf die beweglichen Schleiferabgriffe 26, 28 und 30 der Stellungsgeber 20, 22 und 24, wobei diese Schleiferabgriffe gemäß der Bewegung des Bedienelements 16 über die Widerstandsbahnen 32, 34 bzw. 36 gleiten. Die Widerstandsbahnen 32, 34 und 36 sind dabei jeweils mit einem positiven Pol 38 und einem negativen Pol 40 einer Versorgungsspannung verknüpft. Die mit den Schleiferabgriffen verbundenen Leitungen 42 (Stellungsgeber 20), 44 (Stellungsgeber 22) und 46 (Stellungsgeber 24) sind sowohl mit dem ersten Rechenelement 12 als auch mit dem zweiten Rechenelement 14 verbunden. Ferner sind Meßeinrichtungen 48 bis 50 für Betriebsgrößen der Antriebseinheit und/oder des Fahrzeugs vorgesehen, welche über Leitungen 52 bis 54 mit dem ersten Rechenelement 12 verbunden sind. Ferner sind weitere Meßeinrichtungen 56 bis 58 zur Erfassung von Betriebsgrößen der Antriebseinheit und/oder des Fahrzeugs vorgesehen, die über die Leitungen 60 bis 62 mit dem zweiten Rechenelement 14 verknüpft sind. Zwischen den beiden Rechenelementen 12 und 14 ist ein Leitungssystem 64 zum seriellen Datenaustausch zwischen den beiden Rechenelementen vorgesehen.

Ferner umfaßt die in Figur 1 dargestellte Steuereinrichtung 10 eine Endstufenanordnung 66, welche über eine Ansteuerleitung 68 mit dem zweiten Rechenelement 14 verbunden ist. Die Endstufenanordnung 66 weist Aktivierungs- bzw. Deaktivierungseingänge 70 und 72 auf, wobei der Eingang 70 über die Leitung 74 mit dem ersten, der Eingang 72 über die Leitung 76 mit dem zweiten Rechenelement 14 verknüpft ist. Die Ausgangsleitung 78 der Endstufe ist Ausgangsleitung der Steuereinrichtung 10. Sie ist auf ein Leistungsstellelement 80 einer nicht dargestellten Antriebseinheit, insbesondere einer Brennkraftmaschine, geführt. Dabei handelt es sich in einem bevorzugten Ausführungsbeispiel um eine mittels eines Schrittmotors angetriebenen Drosselklappe.

Das Leistungsstellelement 80 ist über eine mechanische Verbindung 82 mit zwei Stellungsgebern 84 und 86 verbunden, welche in einem bevorzugten Ausführungsbeispiel Potentiometeranordnungen gemäß den Stellungsgebern 20, 22 und 24 darstellen. Daher umfassen die Stellungsgeber 84 und 86 in vergleichbarer Weise Schleiferabgriffe 88, 90, Widerstandsbahnen 92, 94, die an den positiven und negativen Polen der Versorgungsleitung angeschlossen sind. Mit den Schleiferabgriffen 88 bzw. 90 sind Signalleitungen 93 bzw. 95 verbunden, welche sowohl auf das erste, als auch auf das zweite Rechenelement geführt sind.

Weitere Funktion, wie z.B. die Kraftstoffzumessung, können, wie durch die Leitung 99 angedeutet, durch das Rechenelement 12 durchgeführt werden.

Am Beispiel eines bevorzugten Ausführungsbeispiels wird nachfolgend die Funktion der in Figur 1 beschriebenen Steuereinrichtung dargestellt.

Die drei von den Stellungsgebern 20, 22 und 24 erfaßten Stellungswerte für das Bedienelement 16 werden den beiden Rechenelementen 12 und 14 zugeführt. In beiden Rechenelementen wird dann eine Plausibilitätsüberprüfung der drei Signalwerte zueinander durchgeführt und für den Fall, daß ein fehlerhafter Signalwert erkannt wurde, dieser von der weiteren Auswertung ausgeschlossen. Sind alle drei Signalwerte zueinander unplausibel, so schaltet das erkennende Rechenelement über die Leitung 74 die Endstufe 66 ab und übermittelt an das jeweils andere Rechenelement über die Leitung 64 eine entsprechende Information.

Im Rechenelement 12 werden ferner unter anderem die folgenden Maßnahmen durchgeführt.

Aus den zugeführten, zueinander plausiblen Stellungssignalwerten bildet das Rechenelement 12, gegebenenfalls unter Berücksichtigung von weiteren, von den Meßeinrichtungen 48 bis 50 erfaßten Betriebsgrößen, einen Stellungssollwert für das Leistungsstellelement 80.

Die oben erwähnten weiteren Betriebsgrößen sind dabei insbesondere Getriebeparameter, Eingriffssignale einer Antriebsschlupfregelung (ASR) oder einer Motorschleppmomentregelung (MSR) sowie (für den Bereich der Leerlaufregelung) Fahrgeschwindigkeit, Motordrehzahl, Motortemperatur, etc. Ferner kann im Rechenelement 12 auch die Funktion einer Fahrgeschwindigkeitsregelung vorgesehen sein, so daß über die Leitungen 52 bis 54 auch die Stellung eines Bedienhebels, ein Signal bezüglich der Bremsbetätigung sowie weitere zur Fahrgeschwindigkeitsregelung notwendige Signalwerte zugeführt werden.

Der Sollwert für die Stellung des Leistungsstellelements wird im Rechenelement 14 in eine vorgegebene Anzahl von Schritten zur Steuerung eines Schrittmotors für das Stellelement 80 umgesetzt. Dabei läuft ein sogenannter Schrittzähler mit, dessen Zählerstand die Anzahl der auszuführenden Schritte repräsentiert und somit ein Maß für die Stellung des Schrittmotors bzw. des Stellelements 80 darstellt.

Über die Eingangsleitungen 93 und 95 werden den Rechenelementen 12 und 14 Signalwerte für die Stellung des Stellelements 80 zugeführt. Dabei werden in beiden Rechenelementen die Lageinformationen der beiden Stellungsgeber sowie des Schrittzählerstandes auf Plausibilität gegeneinander geprüft und ähnlich wie im Falle der Stellungssignale für das Bedienelement 16 fehlerhafte Lageinformationen ausgeschlossen oder bei Plausibilität der beiden Signalwerte der Stellungsgeber 84 und 86 zueinander bei unplausiblem Schrittzähler auf Schrittverlust geschlossen und der Schrittzähler entsprechend angepaßt. Aus den zugeführten Signalwerten für die Stellung des Stellelements 80 wird ein Istwert der Drosselklappe berechnet, welcher verglichen mit dem berechneten Sollwert ein Maß für die Funktionsfähigkeit des Systems ergibt. Dabei wird untersucht, ob zwischen Soll- und Istwert der Stellung des Stellelements 80 eine bleibende Abweichung besteht. Ist dies der Fall, wird die Endstufenanordnung 66 vom Rechenelement 12 abgeschaltet und der Fehlerzustand über die serielle Schnittstelle 64 dem zweiten Rechenelement 14 mitgeteilt.

Ferner finden im Rechenelement 12 Überwachungsmaßnahmen bezüglich der Einzelsignale statt (Überwachung des Signalwertebereichs).

Insbesondere wird ein MSR-Eingriffssignal, welches einer stellungsvergrößernde Ansteuerung des Stellelements bedeutet, zum einen vom Rechenelement 12 an das Rechenelement 14 weitergeleitet, zum anderen auf einen plausiblen Signalbereich geprüft. Ist ein derartiges Signal nicht plausibel, d.h. befindet sich der Signalwert außerhalb eines vorgegebenen Signalwertebereichs, so wird es dem Rechenelement 14 entsprechend mitgeteilt und die MSR-Funktion ausgeschaltet.

Der berechnete Sollwert wird ferner über die Schnittstelle 64 an das Rechenelement 14 abgegeben, welches den Schrittmotor über eine Stromregelung gemäß den Vorgaben einstellt.

Im Rechenelement 14 werden ferner unter anderem die folgenden Maßnahmen durchgeführt.

Diesem Rechenelement werden ebenfalls die Stellungssignale der Sensoren bzw. Geber 20, 22, 24, 84 und 86 zugeführt. Die oben beschriebenen Plausibilitätsüberprüfungen bezüglich der Stellungssignale von Bedienelement 16 und Stellelement 80 werden daher im Rechenelement 14 mit Hilfe eines Schrittzählers ebenfalls vorgenommen. Darüber hinaus ist vorgesehen, daß im Rechenelement 14 eine zusätzliche, gröbere Überwachung stattfindet. Dabei wird der Stellungswert (berechneter Istwert oder Einzelsignalwerte der Geber 84 und/oder 86) des Stellelements 80 mit dem Stellungswert (Einzelsignalwerte der Geber 20, 22, 24 oder aus diesen berechneter Wert bzw. ein einzelner der Werte) des Bedienelements 16 in Beziehung gesetzt und auf einen vorgegebenen Toleranzbereich überprüft. Befindet sich der Stellungsistwert oberhalb eines von der Stellung des Fahrpedals festgelegten Toleranzbereichs, so wird eine Fehlfunktion des Systems erkannt, die Endstufenanordnung über die Leitung 76 abgeschaltet und über die Leitung 64 dem Rechenelement 12 mitgeteilt. Diese Überwachungsmaßnahmen ist zu der Überwachung des Regelkreises, die im Element 12 durchgeführt wird, redundant. Somit wird die Funktion des Regelkreises durch zwei Überwachungsmaßnahmen, die unabhängig voneinander in zwei Rechenelementen durchgeführt werden, überprüft. Dadurch wird Betriebsicherheit und Verfügbarkeit unter Verringerung des Funktionsumfang der Rechenelemente verbessert, da auf jeweils zwei redundante Überwachungsmaßnahmen in jedem Rechenelement verzichtet werden kann.

Ferner wird im Rechenelement 14 die Plausibilitätsüberprüfung des MSR-Eingriffes vorgenommen. Dabei wird der durch die MSR-Funktion eingestellte Drosselklappenwinkel anhand des Istwertes des Stellelements und des Stellungswert des Bedienelements auf einen beim MSR-Eingriff vorgegebenen plausiblen Bereich überprüft. Befindet sich die Stellung des Stellelements oberhalb dieses plausiblen Bereichs, so wird die Endstufenanordnung abgeschaltet und der Fehlerzustand dem Rechenelement 12 mitgeteilt.

Ferner können im Rechenelement 14 Maßnahmen ergriffen werden, welche die Ein- bzw. Ausschaltbedingungen des Fahrgeschwindigkeitsreglers festlegen (Ausschalten bei Bremsbetätigung, bei Unterschreiten einer minimalen Geschwindigkeitsgrenze, bei Betätigung des "Aus"-Schalters etc.).

Das Rechenelement 12 kann ferner in einem bevorzugten Ausführungsbeispiel darüber hinaus auch noch Aufgaben bezüglich der Kraftstoffeinspritzung, der Zündungseinstellung oder der Getriebesteuerung enthalten. In anderen vorteilhaften Ausführungsbeispielen kann auch vorgesehen sein, daß die Ansteuerung des Schrittmotors nicht vom Rechenelement 14, sondern vom Rechenelement 12 vorgenommen wird.

Ferner kann die beschriebene Aufteilung auch in Verbindung mit Dieselmotoren vorteilhaft sein.

Anstelle der Potentiometer als Stellungsgeber ist es in anderen Ausführungsbeispielen vorteilhaft, berührungslose Stellungsgeber zu verwenden, wobei es auch vorteilhaft sein kann, eine Kombination von Potentiometern und berührungslosen Stellungsgebern vorzusehen. Ferner kann einer der drei Stellungsgeber auch als Schaltelement ausgeführt sein.

Gleiche Überlegungen gelten in Verbindung mit den Stellungsgebern für das Stellelement 80.

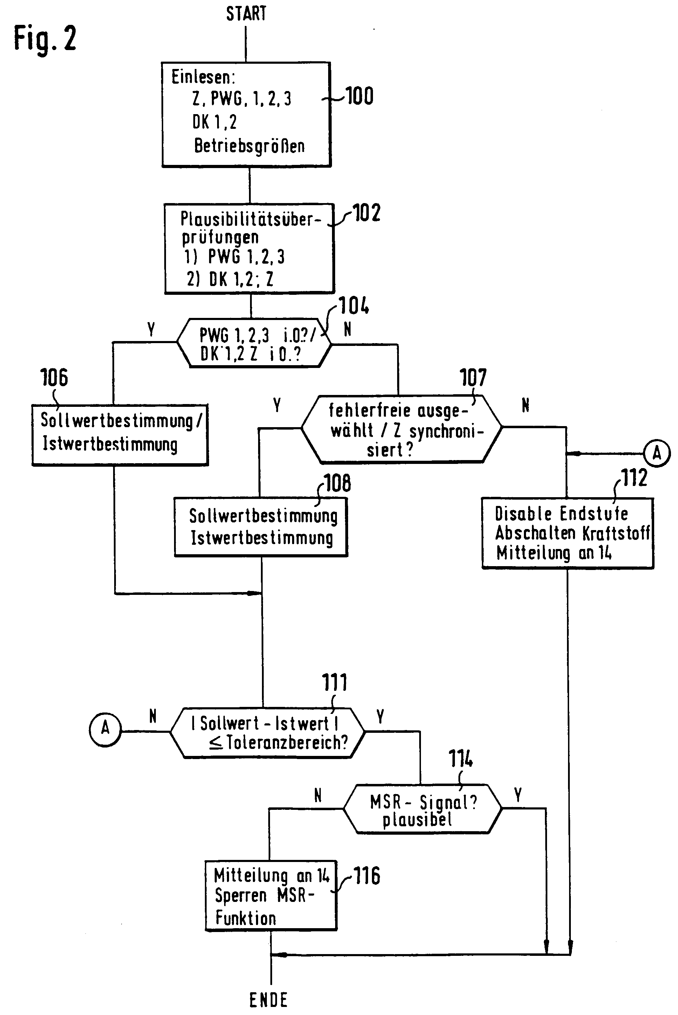

Figur 2 skizziert anhand eines Flußdiagramms die vom Rechenelement 12 durchgeführten Überwachungsmaßnahmen.

Dabei wird in einem ersten Schritt 100 der Zählerstand Z des Schrittzählers ermittelt, die Stellungswerte der drei Stellungsgeber 20, 22 und 24 (PWG1, 2, 3) sowie der Stellungsgeber 84 und 86 (DK1, 2) sowie gegebenenfalls weitere Betriebsgrößen eingelesen.

Danach wird in einem Schritt 102 gemäß den aus dem Stand der Technik bekannten Maßnahmen eine Plausibilitätsüberprüfung sowohl der drei Stellungssignalwerte des Bedienelements 16 zueinander als auch der zwei Stellungssignalwerte des Stellelements 80 und des Schrittzählerstandes vorgenommen.

Im darauffolgenden Abfrageschritt 104 wird überprüft, ob die Plausibilitätsüberprüfung bezüglich der Bedienelementestellung und/oder der Stellelementestellung zu einem fehlerfreien Resultat geführt haben. Ist dies der Fall, so wird im darauffolgenden Schritt 106 die als Basis für eine Berechung eines Stellungssollwerts für das Stellelement dienenden Signalwerte der Stellung des Bedienelements bzw. die als Basis einer Berechnung des Istwerts dienenden Signalwerte der Stellelementestellung bestimmt. Im einem vorteilhaften Ausführungsbeispiel können diese Werte in diesem Schritt berechnet (z.B. Mittelwertbildung, ein Signalwert bevorzugt, etc.) oder in einem separaten Programmschritt ermittelt werden.

Wurde im Schritt 104 erkannt, daß die Plausibilitätsüberprüfungen gemäß Schritt 102 einen Fehlerzustand ergeben haben, so wird im Abfrageschritt 107 überprüft, ob durch die Plausibilitätsabfrage gemäß Schritt 102 bezüglich Bedienelementstellung und/oder Stellelementstellung zwei zueinander plausible Signalgrößen ausgewählt wurden. Bei unplausiblem Schrittzählerstand wird dieser auf die von den Stellungsgebern ermittelten Werte gesetzt.

Ist dies der Fall, wird gemäß Schritt 108 auf der Basis der zueinander plausiblen Signalwerte entsprechend Schritt 106 verfahren.

Sind alle im Schritt 102 verfügbaren Signale der Bedienelementestellung oder der Stellelementestellung zueinander unplausibel, so wird gemäß Schritt 112 die Endstufenanordnung abgeschaltet, eine Notlaufeinrichtung (Abschalten der Kraftstoffzufuhr oberhalb einer vorgegebenen Drehzahl) aktiviert und eine entsprechende Mitteilung an das Rechenelement 14 geschickt.

Die beschriebenen Maßnahmen werden parallel sowohl bezüglich der Stellungssignale des Bedienelements als auch bezüglich der Stellungssignale des Stellelements durchgeführt.

Im auf die Schritte 106 bzw. 108 folgenden Schritt 111 wird der ermittelte Sollwert mit den Istwert der Stellelementestellung zur Überwachung des Regelkreises verglichen. Weichen beide Werte voneinander außerhalb einer vorgegebenen Toleranz ab, so wird mit Schritt 112 fortgefahren. Stimmen die beide Werte im Rahmen der Toleranz überein, so wird in dem auf den Schritt 111 folgenden Schritt 114 wird die Plausibilität der MSR-Eingriffssignale (ein in Richtung "Öffnen" des Stellelement wirkender Sollwert) im Rahmen einer Signalwertebereichsüberprüfung überprüft. Wurde im Schritt 114 ein Fehler erkannt, so wird dies gemäß Schritt 116 dem Rechenelement 14 mitgeteilt und die MSR-Funktion gesperrt. Danach ist, wie auch bei fehlerfreien MSR-Eingriffsignalen der Programmteil beendet.

Das in Figur 2 dargestellte Flußdiagramm beschreibt lediglich die im Rechenelement 12 vorgenommenen Überwachungsmaßnahmen. Selbstverständlich werden im Rechenelement 12 weitere Aufgaben durchgeführt, wie beispielsweise zusätzliche bekannte Überwachungmaßnahmen bezüglich anderer Signale und Maßnahmen wie Berechnung des Zündzeitpunkts, der Einspritzmenge oder eine Fahrgeschwindigkeitsregelung.

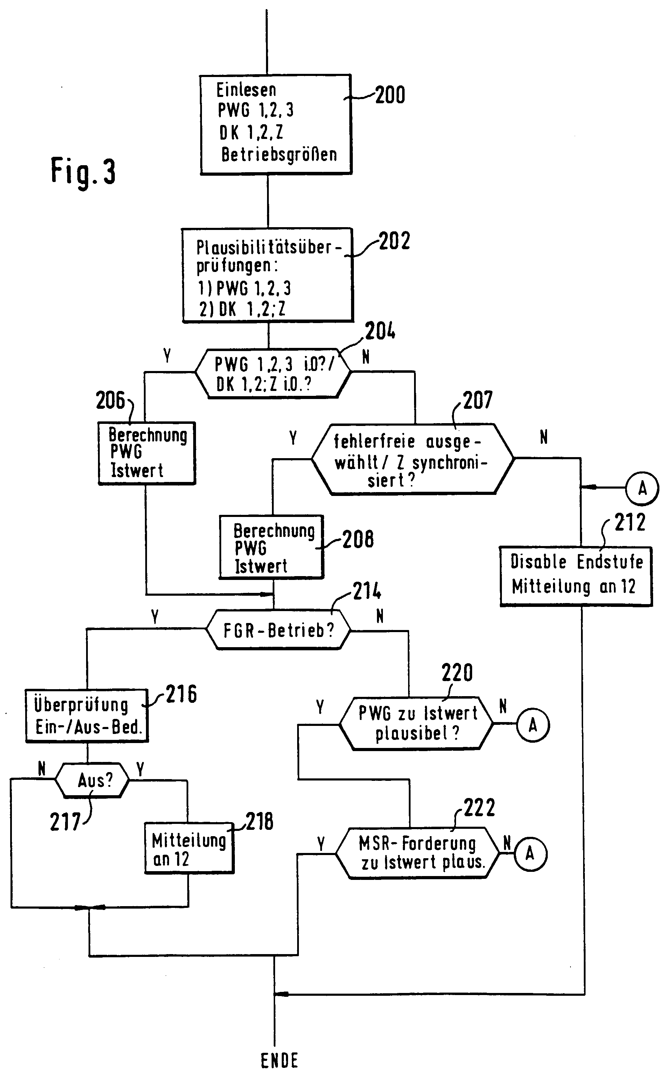

In vergleichbarer Weise zeigt Figur 3 ein Flußdiagramm der im Rechenelement 14 vorgenommenen Überwachungsmaßnahmen, wobei auch hier darauf hingewiesen wird, daß im Rechenelement 14 auch weitere Aufgaben durchgeführt werden, die beispielsweise der Ansteuerung des Schrittmotors dienen.

Auch hier werden im ersten Schritt 200 die Signalwerte der Stellungsgeber des Bedienelements sowie des Stellelements eingelesen, der Schrittzählerstand ermittelt, über die Leitung 46 der vom Rechenelement 12 berechnete Sollwert eingelesen sowie die weitere Betriebsgrößen die gegebenenfalls über die Eingangsleitungen 60 bis 62 zugeführt werden.

Analog zum Flußdiagramm nach Figur 2 werden in den Schritten 202, 204, 207 und 212 die Signalwerte der Stellungsgeber des Bedienelements und des Stellelements auf Plausibilität untereinander überprüft und im fehlerfreien Fall gemäß Schritt 206 Stellungswerte, welche Bedienelement- und Stellelementeposition repräsentieren, ermittelt bzw. die zur Ermittlung dienenden Signalwerte bestimmt. Im Fehlerfall entsprechend Schritt 207 (107) und im Defektfall (Schritt 207 "Nein") wird entsprechend Schritt 208 bzw. 212 (Mitteilung an 12, Abschalten der Endstufe) gemäß Schritt 108 bzw. 112 reagiert.

Führte die Plausibilitätsüberprüfung im Schritt 202 dazu, daß wenigstens zwei Signalwerte jeweils zueinander plausibel sind, eine Stellelementestellung sowie eine Bedienelementestellung gebildet werden konnten, wird im Schritt 214 abgefragt, ob der Fahrgeschwindigkeitsregler aktiv ist. In diesem Fall werden mit Schritt 216 und 217 die Funktionsbedingungen für die Fahrgeschwindigkeitsregelung überprüft (Bremsbetätigung, Ein-/Aus-Schalter, Bedienelement arbeitet korrekt) und gegebenenfalls die Fahrgeschwindigkeitsregelung außer Funktion gesetzt, indem dem Rechenelement 12 eine entsprechende Mitteilung zugeführt wird (Schritt 218). Danach wird der Programmteil für aktive Fahrgeschwindigkeitsregelung beendet.

Befindet sich das System nicht im Fahrgeschwindigkeitsregelbetrieb, so wird gemäß Schritt 220 eine Überwachung der Stellung des Stellelements 80 in Bezug auf die Stellung des Bedienelements 16 durchgeführt. Dabei wird überprüft, ob die beiden Stellungen zueinander im Rahmen einer Toleranz zueinander plausibel sind oder in einer besonders einfachen Form, ob die Stellelementestellung wesentlich größer als vom Bedienelement vorgegeben ist. Ist dies der Fall, so wird gemäß Schritt 212 die Endstufe abgeschaltet und eine Mitteilung an das Rechenelement 12 geschickt, welches gegebenenfalls die Kraftstoffzufuhr abschaltet. Im fehlerfreien Fall wird im Schritt 222 eine Überprüfung der MSR-Funktion durchgeführt. Dabei wird die Stellung des Stellelements mit der vom MSR-Eingriffsignal geforderten Stellung verglichen und ein Fehler dann erkannt, wenn die Stellung des Stellelements 80 im wesentlichen größer ist als der vom MSR-Eingriffsignal vorgegebene Stellungswert. Im Fehlerfall folgt Schritt 212, im fehlerfreien wird der Programmteil beendet.

Darüberhinaus wird im Rechenelement 14 die Ansteuerung des Schrittmotors abhängig vom im Rechenelement 12 ermittelten Sollwert durchgeführt.

In einem bevorzugten Ausführungsbeispiel führt das Rechenelement 12 weitere Funktionen durch, wie z.B. Ansteueraufgaben für Einspritzventile, Berechnungsaufgabe (Sensorsignalauswertung), Begrenzungsaufgaben (Geschwindigkeitsbegrenzung) etc.

Neben der dargestellte Aufteilung der Überwachungsmaßnahmen kann in anderen vorteilhaften Ausführungsformen weitere Aufteilungen vorgesehen sein. Wichtig dabei ist, daß die Aufteilung derart vorgenommen wird, daß eine im ersten Rechenelement durchgeführte Überwachung im zweiten auf einem redundanten Pfad wiederholt wird.

Beispielsweise kann die beschriebene Plausibilitätsüberprüfung der Stellungsgebersignale im zweiten Rechenelement auf eine einfachere Art (Vergleich nur zweier Werte) erfolgen.

## Patentansprüche

1. Steuereinrichtung für Fahrzeuge,
- mit wenigstens zwei Rechenelementen (12, 14), die wenigstens zur Durchführung derselben Steuerfunktion dienen, die wenigstens zwei verschiedene Maßnahmen zur Überprüfung der Funktionsfähigkeit umfaßt,
- mit mehreren Meßeinrichtungen (20, 22, 24, 48 bis 50, 56 bis 58, 84, 86) zur Erfassung von Betriebsgrößen,
dadurch gekennzeichnet, daß
- jedes Rechenelement (12, 14) die Ein- und/oder Ausgangssignale (PWG, DK, Z, MSR, FGR), die derselben Steuerfunktion zugeordnet sind, auf unterschiedliche Plausibilitätskriterien überprüft,
- wobei diese Überwachungsmaßnahmen ausschließlich jeweils nur in einem Rechenelement (12, 14) und unabhängig von dem oder den anderen Rechenelementen (12, 14) vorgenommen werden.

2. Einrichtung nach Anspruch 1, dadurch gekennzeichnet, daß das erste Rechenelement eine Überwachungsmaßnahme anhand der Differenz zwischen einem in Abhängigkeit des Fahrerwunsches stehenden Sollwert und einem Istwert eines Lageregelkreises eines Stellelements vornimmt, während das zweite Rechenelement Überwachungsmaßnahmen einfacherer Art anhand eines Plausibilitätsvergleichs zwischen Fahrerwunsch, vorzugsweise der Stellung eines Bedienelements, und der Stellung des Stellelements durchführt.

3. Einrichtung nach einem der vorhergehenden Ansprüche, dadurch gekennzeichnet, daß die Steuereinrichtung im Rahmen einer elektronischen Motorleistungssteuerung verwendet wird, wobei im ersten Rechenelement die Reglerberechung, im zweiten die Maßnahmen zur Ansteuerung eines Schrittmotors durchgeführt werden und vorzugsweise das erste Rechenelement weitere Funktionen bezüglich Kraftstoffzumessung und/oder Zündungseinstellung durchführt.

4. Einrichtung nach einem der vorhergehenden Ansprüche, dadurch gekennzeichnet, daß die wenigstens zwei Rechenelemente jeweils Plausibilitätsüberprüfungen bezüglich den Lageinformationen von Bedienelement und Stellelement, vorzugsweise 2-aus-3-Auswahlen, durchführen.

5. Einrichtung nach einem der vorhergehenden Ansprüche, dadurch gekennzeichnet, daß das zweite Rechenelement eine Plausibilitätsüberprüfung des Motor schleppmomentregelung-Eingriffs anhand eines Vergleichs zwischen der vorgegebenen und der tatsächlichen Stellung des Stellelements durchführt, während das erste Rechenelement eine Überprüfung des MSR-Signals im Sinne einer Signalwertebereichsüberprüfung durchführt

6. Einrichtung nach einem der vorhergehenden Ansprüche, dadurch gekennzeichnet, daß sich die Rechenelemente gegenseitig durch Datenaustausch überwachen über eine vorzugsweise serielle Schnittstelle.

7. Einrichtung nach einem der vorhergehenden Ansprüche, dadurch gekennzeichnet, daß beide Rechenelemente Zugriff zur Endstufe haben und im erkannten Fehlerfall bei Unplausibilitäten in bezug auf den Regelkreis und der Stellungssignale unabhängig voneinander gemäß dem Ergebnis der ihnen jeweils zugeordneten Überwachungsmaßnahmen die Endstufe abschalten und sich die Rechenelemente insbesondere über das negative Ergebnis ihrer Überwachungen gegenseitig unterrichten.

8. Einrichtung nach einem der vorhergehenden Ansprüche, dadurch gekennzeichnet, daß im Fehlerfall das erste Rechenelement in die Kraftstoffzufuhr eingreift.

9. Einrichtung nach einem der vorhergehenden Ansprüche, dadurch gekennzeichnet, daß im zweiten Rechenelement Plausibilitätsüberprüfungen zum Ein- bzw. Ausschalten eines Fahrgeschwindigkeitsreglers durchgeführt werden.

## Claims

1. Vehicle control device,
- having at least two computing elements (12, 14) which are used at least to carry out the same control function which comprises at least two different measures for checking the operational capability,
- having a plurality of measuring devices (20, 22, 24, 48 to 50, 56 to 58, 84, 86) for detecting operational variables,
characterized in that
- each computing element (12, 14) checks, with respect to different plausibility criteria, the input signals and/or output signals (PWG, DK, Z, MSR, FGR) which are assigned to the same control function,
- these monitoring measures being performed in each case exclusively only in one computing element (12, 14) and independently of the other computing element or elements (12, 14).

2. Device according to Claim 1, characterized in that the first computing element performs a monitoring measure by means of the difference between a desired value which is a function of the driver's wishes and an actual value of a position control circuit of an actuator element, while the second computing element carries out monitoring measures of a simpler kind by means of a plausibility comparison between the driver's wishes, preferably the position of a control element, and the position of the actuator element.

3. Device according to one of the preceding claims, characterized in that the control device is used within the scope of an electronic engine power control, the regulator calculation being carried out in the first computing element and the measures for driving a stepping motor being carried out in the second, and the first computing element preferably carrying out further functions with respect to the metering of fuel and/or the adjustment of ignition.

4. Device according to one of the preceding claims, characterized in that the at least two computing elements each carry out plausibility checks with respect to the position information of control element and actuator element, preferably 2-out-of-3 selections.

5. Device according to one of the preceding claims, characterized in that the second computing element carries out a plausibility check of the intervention in the engine torque control with reference to a comparison between the prescribed position of the actuator element and the actual position of the actuator element, while the first computing element carries out a check of the engine torque control signal in terms of checking the signal value range.

6. Device according to one of the preceding claims, characterized in that the computing elements monitor one another mutually by exchanging data via a preferably serial interface.

7. Device according to one of the preceding claims, characterized in that both computing elements have access to the output stage and, when a fault is detected in the case of implausibilities with respect to the control circuit and the position signals, independently of one another in accordance with the result of the monitoring measures respectively assigned to them, the computing elements switch off the output stage and inform one another in particular of the negative result of their monitoring.

8. Device according to one of the preceding claims, characterized in that in the event of a fault the first computing element intervenes in the fuel supply.

9. Device according to one of the preceding claims, characterized in that plausibility checks for the switching on and/or off of a travel speed regulator are carried out in the second computing element.

## Revendications

1. Installation de commande de véhicule comprenant :
- au moins deux éléments de calcul (12, 14) servant au moins à exécuter la même fonction de commande, comprenant au moins deux mesures différentes pour contrôler l'aptitude au fonctionnement,
- plusieurs installations de mesure (20, 22, 24, 48-50, 56-58, 84, 86) pour saisir des paramètres de fonctionnement,
caractérisée en ce que
- chaque élément de calcul (12, 14) contrôle les signaux d'entrée et/ou de sortie (PWG, DK, Z, MSR, FGR) auxquels sont associées les mêmes fonctions de commande, selon des critères de plausibilité différents,
- ces mesures de surveillance sont effectuées exclusivement chaque fois par seulement un élément de calcul (12, 14) et indépendamment du ou des autres éléments de calcul (12, 14).

2. Installation selon la revendication 1,
caractérisée en ce que
le premier élément de calcul effectue une mesure de surveillance à l'aide de la différence entre une valeur de consigne dépendant du souhait du conducteur et une valeur réel d'un circuit de régulation de position d'un élément de réglage alors que le second élément de calcul effectue des mesures de surveillance de type plus simple par une comparaison de plausibilité entre le souhait du conducteur, de préférence la position d'un élément de commande, et la position de l'élément de réglage.

3. Installation selon l'une des revendications précédentes,
caractérisée en ce que
l'installation de commande est utilisée dans le cadre d'une commande électronique de puissance d'un moteur, un premier élément de calcul effectuant le calcul de régulation et le second prenant des mesures pour commander un moteur pas à pas, et de préférence le premier élément de calcul exécute d'autres fonctions concernant le dosage du carburant et/ou le réglage de l'allumage.

4. Installation selon l'une des revendications précédentes,
caractérisée en ce qu'
au moins les deux éléments de calcul effectuent chacun des contrôles de plausibilité concernant les informations de position de l'élément de commande et de l'élément de réglage, de préférence selon une sélection 2 sur 3.

5. Installation selon l'une des revendications précédentes,
caractérisée en ce que
le second élément de calcul effectue un contrôle de plausibilité de l'action de régulation du couple de frein moteur par une comparaison entre la position prédéterminée et la position réelle de l'élément de réglage alors que le premier élément de calcul effectue un contrôle du signal MSR dans le sens d'un contrôle de plage de valeurs pour le signal.

6. Installation selon l'une des revendications précédentes,
caractérisée en ce que
les éléments de calcul se surveillent réciproquement par l'échange des données par une interface de préférence de type série.

7. Installation selon l'une des revendications précédentes,
caractérisée en ce que
les deux éléments de calcul accèdent à l'étage de sortie et en cas d'erreur reconnue pour une non plausibilité quant au circuit de régulation et aux signaux de réglage, indépendamment l'un de l'autre, selon le résultat des mesures de surveillance qui leur sont respectivement associées, on coupe les étages de sortie et les éléments de calcul se renseignent réciproquement notamment sur le résultat négatif des surveillances qu'ils ont effectuées.

8. Installation selon l'une des revendications précédentes,
caractérisée en ce qu'
en cas d'erreur, le premier élément de calcul agit sur l'alimentation en carburant.

9. Installation selon l'une des revendications précédentes,
caractérisée en ce que
dans le second élément de calcul on exécute des contrôles de plausibilité pour mettre en oeuvre ou couper un circuit de régulation de vitesse.
